# EUROPEAN PATENT APPLICATION

(11) **EP 1 147 843 A2**
(43) Date of publication of application: **24.10.2001**
(21) Application number: 01109406.7
(22) Date of filing: 19.04.2001
(51) Int. Cl.: B23H 1/04, B23H 9/14

(54) **Long-life electrode for electrical discharge drilling units**

(30) Priority: 21.04.2000 IT MO000086
(71) Applicant: Quadrana, Marcello, 40069 Zola Predosa (Prov. of Bologna) (IT)
(72) Inventor: Quadrana, Marcello, 40069 Zola Predosa (Prov. of Bologna) (IT)
(74) Representative: Modiano, Guido, Dr.-Ing.

(57) **Abstract**

A long-life electrode for electrical discharge drilling units is composed of an elongated cylindrical body (2) which has, at an upper end, a tang (2a) for fitting on a supporting and rotatably motorized chuck (M); a plurality of peripheral channels (3) are formed in the body of the electrode, concentrically to a cylindrical central channel, have an annular cross-section and are mutually spaced by way of corresponding means (4); the corresponding ends (3a) of the channels (3) that are directed towards the tang (2a) are respectively connected to pressurized fluid dispensing means (5), the opposite ends (3b) being open and arranged at right angles to a surface (S) to be drilled.

## Description

The present invention relates to a long-life electrode for electrical discharge drilling or EDM units.

Electrodes constituted by a stem along the axis of which two parallel ducts are provided or a single duct is provided having a shaped cross-section, and inside which a pressurized fluid flows, usually water or oil, which constitutes an electrolyte, have long been used to drill metal plates and the like.

Said electrodes are fitted on a spindle of a machine tool and the plates are attacked and drilled with them: substantially, the electrode constitutes the anode and the metal plate constitutes the cathode.

Said conventional electrodes provide a substantially satisfactory performance as regards penetration capacity and the speed with which such operation is performed; however, this performance is achieved at the expense of their durability, which is currently very limited.

The fluid used to remove the residues, by rebounding off the surface to be drilled and mixing with said residues generated as drilling progresses, in fact also attacks the walls of the electrodes, causing deformations thereof, which gradually make their penetration action less effective and precise.

Moreover, since the washing fluid tends to distribute unevenly over the entire useful passage section of the feeder channels with which the electrodes are provided longitudinally, the ends of said electrodes wear so as to assume an undulated profile which causes them to become ineffective, therefore requiring replacement, considerably sooner.

Since the unit cost of said electrodes is significant, any operation for repetitively drilling metal plates, dies and the like is consequently very expensive.

A second drawback of conventional electrodes is that it is not possible to fully remove the residues generated by drilling.

Especially when using electrodes having a single channel for feeding the pressurized washing fluid, said drilling often does not occur completely, i.e. a sort of "core" attached to the metal plate remains at the center of the hole.

Said core is eliminated automatically if the hole to be formed is a through hole, but if a dead hole is to be provided, said core remains attached to the center of the hole and requires an additional intervention to remove it completely, with evident cost increases entailed by the time required and by the consumable material.

The technical aim of the present invention is to solve the above-noted drawbacks of the prior art, by providing a long-life electrode for electrical discharge drilling units which lasts significantly longer than conventional electrodes, allows substantially to perform a much higher number of drilling operations on metal plates than is obtainable with conventional electrodes, allows to completely and rapidly evacuate all the residues produced by the advancement of the drilling process, wears evenly, and maintains its functional characteristics unchanged until its active portion is fully used up.

This aim and other objects are achieved by a long-life electrode for electrical discharge drilling units which is composed of an elongated cylindrical body having, at an upper end, a tang for fitting on a supporting and rotatably motorized chuck, characterized in that in said body, concentrically to a cylindrical central channel, a plurality of peripheral channels are provided, which have an annular cross-section and are mutually spaced by way of corresponding means, the corresponding ends of said channels that are directed towards said tang being respectively connected to means for dispensing pressurized fluid, the opposite ends being open and arranged at right angles to a surface to be drilled.

Further characteristics and advantages will become better apparent from the description of a preferred embodiment of a long-life electrode for electrical discharge drilling units, illustrated only by way of non-limitative example in the accompanying drawings, wherein:

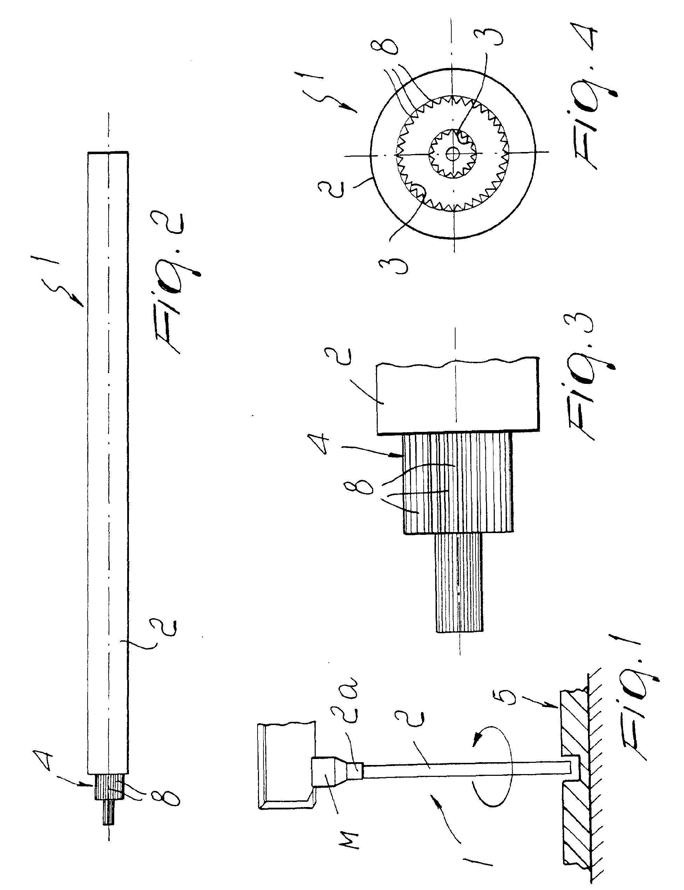

Figure 1 is a reduced-scale view of a possible application of the long-life electrode according to the invention, fitted on an electrical discharge drilling unit, EDM;
Figure 2 is a schematic longitudinal view thereof;
Figure 3 is an enlarged-scale view of one end of the electrode according to the invention in a first embodiment;
Figure 4 is a sectional view, taken along a transverse plane, of the electrode according to the invention in the embodiment shown in Figure 3;
Figure 5 is a longitudinal sectional view of the ends of the electrode according to the invention;

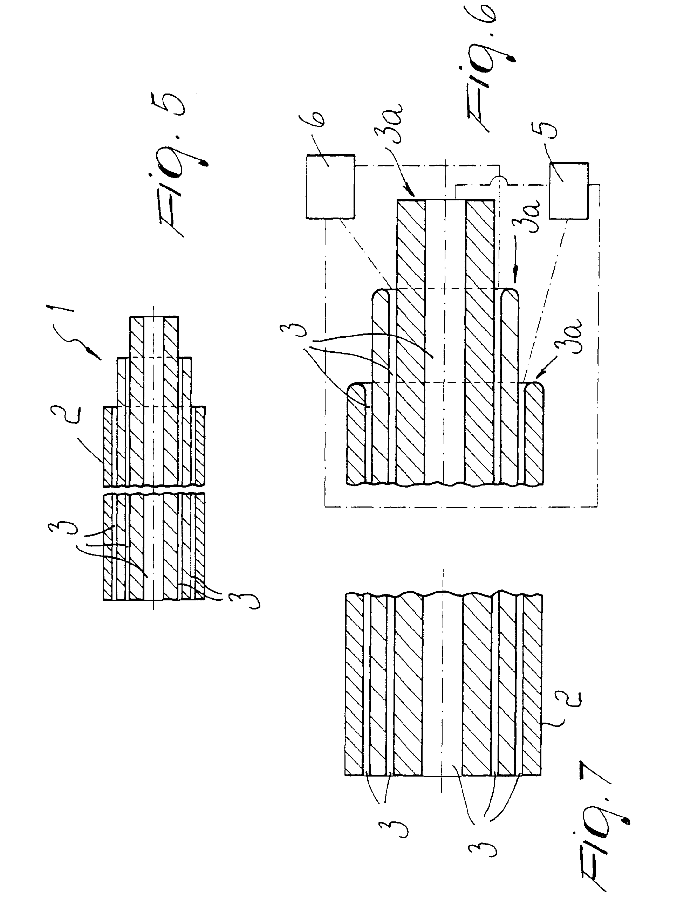

Figure 6 is an enlarged-scale view of a detail of an inlet end of the channels constituting the long-life electrode;
Figure 7 is an enlarged-scale view of a detail of the opposite outlet end of the long-life electrode;

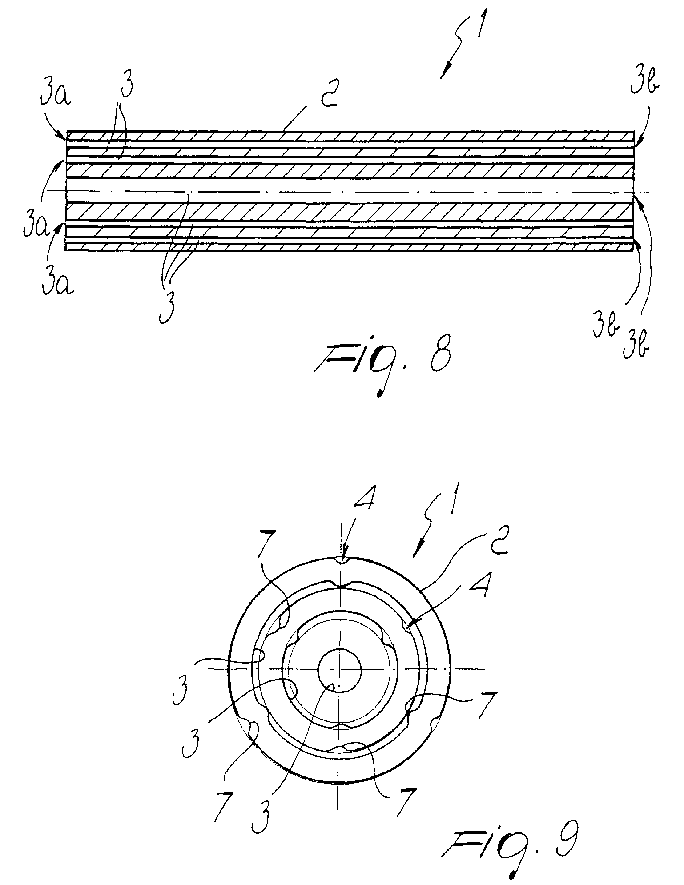

Figure 8 is a longitudinal sectional view of the long-life electrode in a further embodiment;
Figure 9 is a transverse sectional view of the electrode according to the invention, in the embodiment of Figure 8.

With reference to the figures, 1 designates a long-life electrode which is composed of an elongated cylindrical body 2 which has, at an upper end, a tang 2a for engagement on a supporting and rotatably motorized chuck "M" of a generic electrical discharge drilling unit which is otherwise of the type known to the skilled in the art.

A plurality of channels 3 pass concentrically through the body 2 of the electrode 1, which usually acts as an anode; said channels have an annular cross-section and are mutually spaced by way of corresponding means 4, except for the central channel which is cylindrical.

The corresponding ends 3a of the channels 3 that are directed towards said tang 2a are respectively connected to conventional means for dispensing pressurized washing fluid, schematically designated by 5, and the opposite ends 3b are open and directed at right angles to a conventional surface "S" to be drilled, which usually acts as a cathode.

Said corresponding ends 3a directed towards said tang can also be connected not only to said means 5 for dispensing pressurized washing fluid but also to means for recovering the ejected fluid by suction, schematically designated by 6.

The spacer means 4 are constituted, in a first embodiment, by longitudinal ridges 7 protruding centripetally between the walls that form each one of said channels 3 and having such an extension as to make contact with the opposite walls; said ridges 7, in plan view, are arranged radially.

Alternatively, the spacing means 4 can also be constituted by respective knurled portions 8 which also protrude centripetally from corresponding walls of each channel 3 and in this case also have such an extension as to make contact with the opposite walls.

The knurled portions 8, in a preferred embodiment, extend all over the perimeter of the wall from which they protrude and their generatrix is straight and parallel to the longitudinal axis "A" of the electrode 1.

The operation of the invention is as follows: the electrode 1, fitted on a conventional chuck M, usually constitutes the anode, while the metal plate S constitutes the cathode.

During drilling, the washing liquid, which is usually distilled water and accordingly does not conduct current, is ejected through the concentric channels 3 and the central channel that pass through said electrode 1.

In this manner, a jet of pressurized distilled water is ejected from the ends 3b and strikes practically all of the surface affected by the drilling action.

The washing action thus prevents the forming of accumulations, since there are no regions that are not reached, as instead occurs in conventional electrodes.

In a further embodiment of the invention, the channels 3 can be used alternatively for the ejection of pressurized distilled water and for its recovery, with the action of the suction means 6, which are not described in detail since they are conventional.

In summary, in addition to the accurate washing action distributed over the entire region affected by drilling, the drilling electrode 1 according to the invention also allows to remove from the machining area the residues generated by said drilling, avoiding possible electrical bridges with consequent damaging discharges.

In practice it has been found that the described invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. MO2000A000086, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A long-life electrode for electrical discharge drilling units, composed of an elongated cylindrical body which has, at an upper end, a tang for fitting on a supporting and rotatably motorized chuck, **characterized in that** in said body, concentrically to a cylindrical central channel, there are provided a plurality of peripheral channels which have an annular cross-section and are mutually spaced by way of corresponding means, the corresponding ends of said channels that are directed towards said tang being respectively connected to means for dispensing pressurized fluid, the opposite ends being open and arranged at right angles to a surface to be drilled.

2. The electrode according to claim 1, **characterized in that** said corresponding ends directed towards said tang are connected to means for dispensing pressurized fluid and to means for recovering ejected fluid by suction.

3. The electrode according to claim 1, **characterized in that** said spacing means are constituted by longitudinal ridges which protrude centripetally between the walls of said channels so as to make contact with the mutually opposite walls and are arranged radially.

4. The electrode according to claim 1, **characterized in that** said spacing means are constituted by respective knurled portions which protrude from corresponding walls of each channel so as to make contact with the opposite walls.

5. The electrode according to claims 1 and 2, **characterized in that** said concentric channels are alternately meant for the passage of fluid directed towards the open ends and for the recovery by suction of the waste fluid and of the drilling residues.

6. The electrode according to claim 4, **characterized in that** said knurled portions have a straight generatrix which is parallel to the longitudinal axis of said electrode.

7. The electrode according to claims 4 and 6, **characterized in that** said knurled portions extend over the entire surface of the wall from which they protrude.
